# EUROPEAN PATENT APPLICATION

(11) **EP 4 538 333 A1**
(43) Date of publication of application: **16.04.2025**
(21) Application number: 23819822.0
(22) Date of filing: 06.06.2023
(51) Int. Cl.: C09D 5/14, A01P 1/00, C09D 139/06, C09D 7/20, C09D 7/62, A01N 25/10, A01N 59/06, A01N 59/20

(54) **ANTIVIRAL COATING COMPOSITION, COATING FILM, AND ARTICLE**

(30) Priority: 08.06.2022 JP 2022093310
(71) Applicant: Toyo Seikan Group Holdings, Ltd., Shinagawa-ku Tokyo 141-8627 (JP)
(72) Inventor: KIMURA Mariko, Yokohama-shi, Kanagawa 240-0062 (JP); OHASHI Kazuaki, Yokohama-shi, Kanagawa 240-0062 (JP); IKUTAME Daisuke, Yokohama-shi, Kanagawa 240-0062 (JP); IKEDA Kazuho, Yokohama-shi, Kanagawa 240-0062 (JP)
(74) Representative: Körfer, Thomas
(86) International application number: PCT/JP2023/020922
(87) International publication number: WO 2023/238842

(57) **Abstract**

An object of the present invention is to provide an antiviral coating composition being capable of forming a coating film whose metal-doped silica exhibits excellent antiviral properties and which is firmly retained on the surface of an article; a coating film formed from the antiviral coating composition; and an article comprising the coating film. The antiviral coating composition of the present invention as a means for resolution comprises (1) a metal-doped silica, (2) a vinylpyrrolidone unit-containing polymer, and (3) an alcohol-based solvent or a mixed solvent of an alcohol-based solvent and water. The coating film of the present invention is formed from the antiviral coating composition of the present invention. The article of the present invention comprises the coating film of the present invention.

## Description

### Technical Field

The present invention relates to an antiviral coating composition, a coating film, and an article.

### Background Art

As is well known, in recent years, with the emergence of new strains of influenza virus and coronavirus that cause severe symptoms upon infection, etc., there has been a growing interest in antiviral agents to combat viral infections. Viruses can be broadly classified, based on their structure, into viruses with envelopes composed of lipids or glycoproteins (enveloped viruses) and viruses without envelopes (non-enveloped viruses). Influenza virus is a typical example of an enveloped virus, while norovirus is a typical example of a non-enveloped virus. Compared to enveloped viruses, non-enveloped viruses are said to be more resistant to alcohol and heat, and be more infectious. For this reason, research and development of antiviral agents that exhibit excellent antiviral action not only against enveloped viruses but also against non-enveloped viruses has been actively conducted, and the present inventors have also proposed, in Patent Document 1, an inorganic antiviral agent composed of a metal-doped silica as an antiviral agent that exhibits excellent antiviral action not only against enveloped viruses but also against non-enveloped viruses.

The inorganic antiviral agent proposed by the present inventors in Patent Document 1 can be utilized as a material for imparting antiviral properties to various articles around us. However, when its mode of use employed is a mode in which the metal-doped silica is incorporated into a coating composition, and the composition is applied to the surface of an article, it is necessary that a coating film formed from the metal-doped silica-containing coating composition is a coating film whose metal-doped silica exhibits excellent antiviral properties and which is firmly retained on the surface of an article.

### Prior Art Documents

### Patent Document

Patent Document 1: JP2021-175741A

### Summary of the Invention

### Problems that the Invention is to Solve

Thus, an object of the present invention is to provide an antiviral coating composition being capable of forming a coating film whose metal-doped silica exhibits excellent antiviral properties and which is firmly retained on the surface of an article; a coating film formed from the antiviral coating composition; and an article comprising the coating film.

### Means for Solving the Problem

The present inventors have conducted extensive research in view of the above points. As a result, they have found that in the production of a coating composition containing a metal-doped silica, when a vinylpyrrolidone unit-containing polymer is used as a resin component (film-forming agent), a coating film formed from the coating composition is a coating film whose metal-doped silica exhibits excellent antiviral properties and which is firmly retained on the surface of an article.

The antiviral coating composition of the present invention accomplished based on the above findings comprises, as defined in claim 1:
(1) a metal-doped silica;
(2) a vinylpyrrolidone unit-containing polymer; and
(3) an alcohol-based solvent or a mixed solvent of an alcohol-based solvent and water.

In addition, the antiviral coating composition according to claim 2 is the antiviral coating composition according to claim 1, wherein the metal doped in the silica is at least one member selected from the group consisting of copper, aluminum, zirconium, cobalt, manganese, and iron.

In addition, the antiviral coating composition according to claim 3 is the antiviral coating composition according to claim 2, wherein the metal doped in the silica is copper and/or aluminum.

In addition, the antiviral coating composition according to claim 4 is the antiviral coating composition according to claim 1, wherein the silica is a porous silica.

In addition, the antiviral coating composition according to claim 5 is the antiviral coating composition according to claim 1, wherein the pyrrolidone unit-containing polymer is a copolymer of a vinylpyrrolidone unit and a non-vinylpyrrolidone unit.

In addition, the antiviral coating composition according to claim 6 is the antiviral coating composition according to claim 5, wherein the ratio between the vinylpyrrolidone unit and the non-vinylpyrrolidone unit (vinylpyrrolidone unit:non-vinylpyrrolidone unit) is 2:8 to 8:2.

In addition, the antiviral coating composition according to claim 7 is the antiviral coating composition according to claim 5, wherein the copolymer of a vinylpyrrolidone unit and a non-vinylpyrrolidone unit is a copolymer of vinylpyrrolidone and vinyl acetate.

In addition, the antiviral coating composition according to claim 8 is the antiviral coating composition according to claim 1, wherein the pyrrolidone unit-containing polymer is polyvinylpyrrolidone.

In addition, the antiviral coating composition according to claim 9 is the antiviral coating composition according to claim 1, wherein the pyrrolidone unit-containing polymer has a weight average molecular weight of 5,000 to 1,500,000.

In addition, the antiviral coating composition according to claim 10 is the antiviral coating composition according to claim 1, wherein the alcohol-based solvent is ethanol.

In addition, the antiviral coating composition according to claim 11 is the antiviral coating composition according to claim 1, wherein the contents of the metal-doped silica, the vinylpyrrolidone unit-containing polymer, and the alcohol-based solvent or the mixed solvent of an alcohol-based solvent and water in the antiviral coating composition, respectively, are as follows: the content of the metal-doped silica is 0.1 to 20 wt%, the content of the vinylpyrrolidone unit-containing polymer is 0.1 to 20 wt%, and the content of the alcohol-based solvent or the mixed solvent of an alcohol-based solvent and water is 60 to 99.8 wt%.

In addition, the antiviral coating composition according to claim 12 is the antiviral coating composition according to claim 1, wherein the weight ratio between the metal-doped silica and the vinylpyrrolidone unit-containing polymer (metal-doped silica:vinylpyrrolidone unit-containing polymer) is 1:99 to 75:25.

In addition, the method for producing an antiviral coating composition of the present invention comprises, as defined in claim 13, a step in which
(1) a metal-doped silica;
(2) a vinylpyrrolidone unit-containing polymer; and
(3) an alcohol-based solvent or a mixed solvent of an alcohol-based solvent and water are housed in a treatment container and ball-milled.

In addition, the antiviral coating film of the present invention comprises, as defined in claim 14, (1) a metal-doped silica and (2) a vinylpyrrolidone unit-containing polymer.

In addition, the antiviral coating film according to claim 15 is the antiviral coating film according to claim 14, wherein the antiviral coating film is formed from the antiviral coating composition according to claim 1.

In addition, the article of the present invention comprises, as defined in claim 16, the antiviral coating film according to claim 14.

### Effect of the Invention

The present invention makes it possible to provide an antiviral coating composition being capable of forming a coating film whose metal-doped silica exhibits excellent antiviral properties and which is firmly retained on the surface of an article; a coating film formed from the antiviral coating composition; and an article comprising the coating film.

### Brief Description of the Drawings

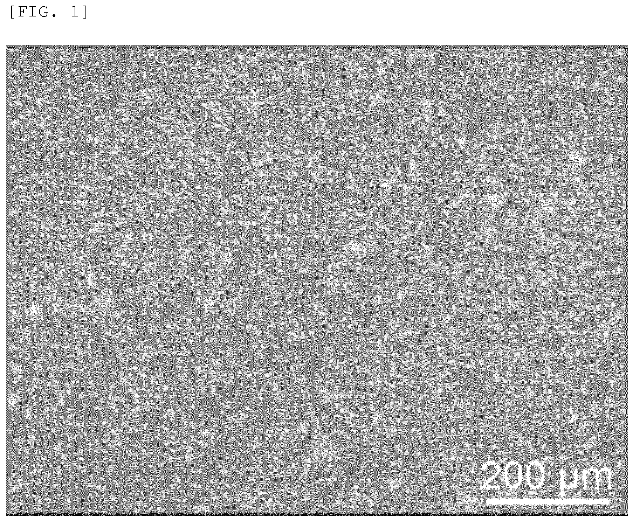

[FIG. 1] A microscopic photograph of the coating film formed from the antiviral coating composition of the present invention produced in Production Example 11.

### Mode for Carrying Out the Invention

The antiviral coating composition of the present invention comprises:
(1) a metal-doped silica;
(2) a vinylpyrrolidone unit-containing polymer; and
(3) an alcohol-based solvent or a mixed solvent of an alcohol-based solvent and water.

In the antiviral coating composition of the present invention, the metal-doped silica may be the inorganic antiviral agent described in Patent Document 1, for example. Here, "metal-doped silica" means silica in which a metal is incorporated through chemical bonding into an inorganic network composed of silica-forming siloxane bonds. The metal-doped silica may be porous or non-porous, and its shape is not particularly limited.

As metals doped in the silica, for example, copper, aluminum, zirconium, cobalt, manganese, and iron can be mentioned. They may be used alone or as a combination of two or more kinds.

The content of the metal in the metal-doped silica (in the case of using a combination of two or more kinds of metals, their total amount) is, for example, 0.01 to 40 wt%, preferably 0.1 to 20 wt%, and more preferably 1 to 10 wt%. When the content of the metal in the metal-doped silica is less than 0.01 wt%, sufficient antiviral action may not be obtained, while silica doped with copper in an amount of more than 40 wt% may be difficult to produce. In the case of using a combination of two or more kinds of metals, the content ratio between the metals may be such that the content of one metal is 0.1 to 2 times the content of the other metal, for example.

In the case where the metal-doped silica is porous, the metal-doped porous silica may be the one described by the present inventors in JP2020-15640A, for example. The specific description is as follows.

As a porous silica, for example, a mesoporous silica in which fine pores (mesopores) having a diameter of 2 to 50 nm are regularly arranged can be mentioned.

It is preferable that the porous silica has a specific surface area of 500 to 2000 m²/g, for example, for the reason that durability can be maintained.

The production of a metal-doped mesoporous silica can be performed according to the following method known per se described in JP2020-15640A, for example.

### (Step 1)

First, a surfactant and a raw material for doping a metal in a mesoporous silica are dissolved in a solvent and stirred at 30 to 200°C for 0.5 to 10 hours, for example, thereby forming micelles of the surfactant.

The amount of the surfactant dissolved in the solvent is, for example, 10 to 400 mmol/L, preferably 50 to 150 mmol/L. Alternatively, the amount of the surfactant dissolved in the solvent is, per 1 mol of a silica raw material added in the below-described Step 2, for example, 0.01 to 5.0 mol, preferably 0.05 to 1.0 mol.

As the surfactant, any of cationic surfactants, anionic surfactants, and nonionic surfactants may be used, but cationic surfactants such as alkylammonium salts are preferable. As alkylammonium salts, those having a C₈ or higher alkyl group are preferable, and, in view of industrial availability, those having a C₁₂₋₁₈ alkyl group are more preferable. As specific examples of alkylammonium salts, hexadecyltrimethylammonium chloride, cetyltrimethylammonium bromide, stearyltrimethylammonium bromide, cetyltrimethylammonium chloride, stearyltrimethylammonium chloride, dodecyltrimethylammonium bromide, octadecyltrimethylammonium bromide, dodecyltrimethylammonium chloride, octadecyltrimethylammonium chloride, didodecyldimethylammonium bromide, ditetradecyldimethylammonium bromide, didodecyldimethylammonium chloride, ditetradecyldimethylammonium chloride, and the like can be mentioned. Surfactants may be used alone or as a combination of two or more kinds.

The amount of a raw material for doping a metal in a mesoporous silica (in the case of using a combination of two or more kinds of metals, the total amount of respective raw materials) dissolved in the solvent is, per 1 mol of a silica raw material added in the below-described Step 2, for example, 0.001 to 1 mol, preferably 0.005 to 0.5 mol, and more preferably 0.01 to 0.1 mol.

As the raw material for doping a metal in a mesoporous silica, for example, a metal nitrate, sulfate, chloride, or oxychloride can be used. In the case of doping copper, it is preferable to use copper nitrate or copper chloride. In the case of doping aluminum, it is preferable to use aluminum chloride. In the case of doping zirconium, it is preferable to use zirconium oxychloride. In the case of doping cobalt, it is preferable to use cobalt nitrate. In the case of doping manganese, it is preferable to use manganese chloride. In the case of doping iron, it is preferable to use iron chloride. Raw materials for doping a metal may be used alone or as a combination of two or more kinds.

As the solvent, for example, water can be used. The solvent may be a mixed solvent of water and a water-soluble organic solvent such as methanol, ethanol, and a polyhydric alcohol including diethylene glycol, glycerin, or the like.

### (Step 2)

Next, in the solution where the surfactant forms micelles obtained in Step 1, a silica raw material is dissolved at room temperature, for example, and stirred until uniform to allow the silica raw material to accumulate on the surface of the surfactant micelles. The amount of the silica raw material dissolved in the solution is 0.2 to 1.8 mol/L, for example. Alternatively, in the case where water or a mixed solvent of water and a water-soluble organic solvent is used as the solvent, the amount is 0.001 to 0.05 mol per 1 mol of water, for example.

The silica raw material is not particularly limited as long as it forms an inorganic network composed of mesoporous silica-forming siloxane bonds upon a dehydration condensation. As specific examples of silica raw materials, tetraalkoxysilanes, such as tetraethoxysilane, tetramethoxysilane, and tetra-n-butoxysilane, and sodium silicate can be mentioned. Tetraalkoxysilanes are preferable, and tetraethoxysilane is more preferable. Silica raw materials may be used alone or as a combination of two or more kinds.

### (Step 3)

Next, the silica raw material accumulated on the surface of the surfactant micelles is subjected to a dehydration condensation to form an inorganic network composed of mesoporous silica-forming siloxane bonds, and, at the same time, a metal is incorporated through chemical bonding into the inorganic network. The dehydration condensation of the silica raw material can be caused, for example, by adding a basic aqueous solution into the system to raise the pH, followed by stirring at room temperature for 1 hour or more. The basic aqueous solution is preferably added such that the pH immediately after the addition is 8 to 14, more preferably 9 to 11. As specific examples of basic aqueous solutions, an aqueous sodium hydroxide solution, an aqueous sodium carbonate solution, and aqueous ammonia can be mentioned, and an aqueous sodium hydroxide solution is preferable. Basic aqueous solutions may be used alone or as a combination of two or more kinds. Incidentally, the dehydration condensation of the silica raw material can also be caused by adding an acidic aqueous solution such as an aqueous hydrochloric acid solution into the system to lower the pH, followed by stirring.

### (Step 4)

Finally, the surfactant micelles having formed on the surface thereof an inorganic network composed of mesoporous silica-forming siloxane bonds, into which a metal has been incorporated through chemical bonding, obtained in Step 3 are collected by filtration as precipitates, dried at 30 to 70°C for 10 to 48 hours, for example, and then calcined at 400 to 600°C for 1 to 10 hours to obtain the intended metal-doped mesoporous silica. The metal-doped mesoporous silica thus obtained may be pulverized in a mixer or a mill as necessary to have the desired particle size (e. g., a median diameter of 0.01 to 100 µm).

Incidentally, the addition of the raw material for doping a metal in a mesoporous silica into the system is not limited to the embodiment in which the raw material is dissolved in a solvent together with a surfactant in the above Step 1, and may also be an embodiment in which the raw material is dissolved in the solution in Step 2 or Step 3 as long as it takes place before the formation of an inorganic network composed of mesoporous silica-forming siloxane bonds upon the dehydration condensation of the silica raw material in Step 3 is completed.

In the case where the metal-doped silica is non-porous, the metal-doped non-porous silica can be produced using a precipitation process that is well known as a method for producing a non-porous silica, for example. Specifically, the production is possible by allowing a raw material for doping a metal in a non-porous silica to coexist in the system during the neutralization reaction between an alkali metal silicate, which is a silica raw material, and a mineral acid. The raw material for doping a metal in a non-porous silica can be the same as those for doping a metal in a mesoporous silica described above. The amount of the raw material used for doping a metal in a non-porous silica (in the case of a combination of two or more kinds of metals, the total amount of respective raw materials) is, for example, 0.001 to 0.5 mol, preferably 0.01 to 0.1 mol, per 1 mol of an alkali metal silicate as a silica raw material. The alkali metal silicate used as a silica raw material may be a common one used for the production of a non-porous silica by a precipitation process. Specifically, sodium silicate, potassium silicate, and the like can be mentioned, and the molar ratio between silica and alkali: SiO₂/M₂O (M is Na, K, etc.) is 0.5 to 4, for example. The amount of the alkali metal silicate dissolved in a solvent (water, etc.) is, for example, 0.001 to 0.05 mol per 1 mol of a solvent. As the mineral acid, hydrochloric acid, sulfuric acid, or nitric acid can be used. The metal-doped non-porous silica is obtained as precipitates formed from the neutralization reaction between an alkali metal silicate and a mineral acid, and its collection by filtration, washing, drying, and the like can be performed in accordance with methods employed in the production of a non-porous silica by a precipitation process. As necessary, calcination at a high temperature of 300°C or more may be finally performed. The specific surface area (BET specific surface area) of the metal-doped non-porous silica thus produced is 0.1 to 350 m²/g, for example. As necessary, as in the case of the metal-doped mesoporous silica described above, the silica may be pulverized in a mixer or a mill to have the desired particle size (e.g., a median diameter of 0.01 to 100 µm).

The vinylpyrrolidone unit-containing polymer used as a resin component in the antiviral coating composition of the present invention may be a copolymer of a vinylpyrrolidone unit and a non-vinylpyrrolidone unit, for example. In this case, in order to facilitate the formation of a coating film whose metal-doped silica exhibits excellent antiviral properties and which is firmly retained on the surface of an article, it is preferable that the ratio between the vinylpyrrolidone unit and the non-vinylpyrrolidone unit (vinylpyrrolidone unit:non-vinylpyrrolidone unit) is 2:8 to 8:2. As specific examples of copolymers of a vinylpyrrolidone unit and a non-vinylpyrrolidone unit, a copolymer of vinylpyrrolidone and dimethylaminoethyl methacrylate, a copolymer of vinylpyrrolidone and methylvinylimidazolinium chloride, a copolymer of vinylpyrrolidone and dimethylaminopropylamide methacrylate, a copolymer of vinylpyrrolidone and quaternized imidazoline, vinylpyrrolidone, vinylcaprolactam, and methylvinylimidazolium methylsulfate, a copolymer of vinylpyrrolidone and vinyl acetate, a copolymer of vinylpyrrolidone and eicosene, a copolymer of vinylpyrrolidone and hexadecene, a copolymer of vinylpyrrolidone and styrene, and a copolymer of vinylpyrrolidone, vinylcaprolactam, and dimethylaminoethyl methacrylate can be mentioned. In addition, the vinylpyrrolidone unit-containing polymer may also be polyvinylpyrrolidone. The weight average molecular weight of the vinylpyrrolidone unit-containing polymer is, for example, 5,000 to 1,500,000, preferably 6,000 to 1,000,000, more preferably 7,000 to 500,000, and still more preferably 8,000 to 100,000. When the weight average molecular weight of the vinylpyrrolidone unit-containing polymer is too small, in the case where the metal-doped silica is porous, the molecules enter fine pores of the silica. As a result, in the case where the exhibition of characteristics due to the presence of fine pores (deodorizing properties, etc.) is expected in addition to the exhibition of antiviral properties, such exhibition may be difficult. Meanwhile, when the weight average molecular weight is too large, molecules may entirely cover the silica surface, whereby antiviral properties of the silica, which are exhibited upon virus adsorption, may be inhibited. Vinylpyrrolidone unit-containing polymers may be used alone or as a combination of two or more kinds.

In the antiviral coating composition of the present invention, the alcohol-based solvent may be a common one used as a component of a coating composition. As specific examples thereof, methanol, ethanol, and isopropyl alcohol can be mentioned. Alcohol-based solvents may be used alone or as a combination of two or more kinds. In the case where a mixed solvent of an alcohol-based solvent and water is used, the weight ratio between the alcohol-based solvent and water (alcohol-based solvent:water) is 1:5 to 100:1, for example.

The contents of the metal-doped silica, the vinylpyrrolidone unit-containing polymer, and the alcohol-based solvent or the mixed solvent of an alcohol-based solvent and water in the antiviral coating composition of the present invention are, for example, as follows: the content of the metal-doped silica is 0.1 to 20 wt%, the content of the vinylpyrrolidone unit-containing polymer is 0.1 to 20 wt%, and the content of the alcohol-based solvent or the mixed solvent of an alcohol-based solvent and water is 60 to 99.8 wt%. The antiviral coating composition of the present invention may incorporate pigments, fragrances, dispersants, defoamers, leveling agents, lubricants, fungicides, preservatives, waxes, and the like, commonly used as components of a coating composition. In the case where these components are incorporated, the content of the alcohol-based solvent or the mixed solvent of an alcohol-based solvent and water is reduced by the contents of these components. In addition, in the production of the antiviral coating composition of the present invention, in the case where the metal-doped silica is provided as a slurry suspended in a dispersion medium different from the alcohol-based solvent or the mixed solvent of an alcohol-based solvent and water used in the antiviral coating composition of the present invention, or the vinylpyrrolidone unit-containing polymer is provided as a solution dissolved in a solvent different from the alcohol-based solvent or the mixed solvent of an alcohol-based solvent and water used in the antiviral coating composition of the present invention, the antiviral coating composition of the present invention may contain such a dispersion medium or solvent. Also in this case, the content of the alcohol-based solvent or the mixed solvent of an alcohol-based solvent and water is reduced by the contents of these components.

The weight ratio between the metal-doped silica and the vinylpyrrolidone unit-containing polymer in the antiviral coating composition of the present invention (metal-doped silica:vinylpyrrolidone unit-containing polymer) is preferably 1:99 to 75:25, more preferably 15:85 to 70:30, and still more preferably 25:75 to 65:35. When the proportion of the metal-doped silica is too small, it may be difficult to form a coating film whose metal-doped silica exhibits excellent antiviral properties. Meanwhile, when the proportion of the vinylpyrrolidone unit-containing polymer is too small, it may be difficult to form a coating film that is firmly retained on the surface of an article.

The antiviral coating composition of the present invention can be produced by mixing, after adjusting the temperature as necessary, a metal-doped silica, a vinylpyrrolidone unit-containing polymer, and an alcohol-based solvent or a mixed solvent of an alcohol-based solvent and water, each to a desired content, according to a common method for producing a coating composition. It is preferable that the mixing of a metal-doped silica, a vinylpyrrolidone unit-containing polymer, and an alcohol-based solvent or a mixed solvent of an alcohol-based solvent and water is performed by ball-milling them. As a result of ball-milling a metal-doped silica, a vinylpyrrolidone unit-containing polymer, and an alcohol-based solvent or a mixed solvent of an alcohol-based solvent and water, a coating composition having the metal-doped silica uniformly dispersed therein without aggregation in the alcohol-based solvent or the mixed solvent of an alcohol-based solvent and water, in which the vinylpyrrolidone unit-containing polymer is uniformly dissolved, can be obtained. As result, in the formed coating film, the metal-doped silica is loaded while being uniformly dispersed without aggregation, and thus is prevented from shedding from the coating film. At the same time, despite the coexistence of the metal-doped silica, the vinylpyrrolidone unit-containing polymer acquires high adhesion to the surface of an article, making it easy to form a coating film whose metal-doped silica exhibits excellent antiviral properties and which is firmly retained on the surface of an article.

Ball milling can be performed by housing a metal-doped silica, a vinylpyrrolidone unit-containing polymer, and an alcohol-based solvent or a mixed solvent of an alcohol-based solvent and water in a treatment container together with balls used for ball milling (media), then putting the treatment container housing them on a ball mill stand, and rotating the same (the rotation speed employed is within a range of 15 to 2,000 rpm, for example). The time of ball milling is, for example, 1 to 50 hours, preferably 6 to 30 hours. With respect to balls used for ball milling (e.g., 1 to 5 mmϕ alumina balls or zirconia balls), it is preferable to use the number of balls weighing 1 to 5 times the total weight of the metal-doped silica, the vinylpyrrolidone unit-containing polymer, the alcohol-based solvent or the mixed solvent of an alcohol-based solvent and water, other components incorporated as necessary, the dispersion medium used in the case where the metal-doped silica is provided as a slurry suspended in a dispersion medium different from the alcohol-based solvent or the mixed solvent of an alcohol-based solvent and water used in the antiviral coating composition of the present invention, and the solvent used in the case where the vinylpyrrolidone unit-containing polymer is provided as a solution dissolved in a solvent different from the alcohol-based solvent or the mixed solvent of an alcohol-based solvent and water used in the antiviral coating composition of the present invention. The alcohol-based solvent or the mixed solvent of an alcohol-based solvent and water to be housed in the treatment container may be part of the content in the antiviral coating composition of the present invention. In this case, after ball milling, an alcohol-based solvent or a mixed solvent of an alcohol-based solvent and water may be added to achieve the content in the antiviral coating composition of the present invention.

The antiviral coating composition of the present invention can be unitized for imparting antiviral properties to articles around us, such as textile products, nonwoven fabric products, leather products, building materials, wood, glass, plastics, films, ceramics, paper, pulp, stationeries, toys, containers, caps, pouring tools, and spouts. As the method for applying the antiviral coating composition of the present invention to the surface of an article, a conventionally known method for applying a coating composition to the surface of an article, for example, a method in which the antiviral coating composition of the present invention is filled into a spray can together with a propellant composed of a liquefied petroleum gas, a nitrogen gas, a carbon dioxide gas, dimethyl ether, a hydrofluoroolefin, a hydrofluorocarbon, or the like, aerosolized, and applied to the surface of an article, a method in which the antiviral coating composition of the present invention is applied to the surface of an article using various coaters, a method in which an article is immersed in the antiviral coating composition of the present invention to apply the antiviral coating composition of the present invention to the surface of the article, or the like can be employed. With any method employed, the antiviral coating composition of the present invention is applied to the surface of an article, followed by natural drying or heat drying, whereby a coating film whose metal-doped silica exhibits excellent antiviral properties and which is firmly retained on the surface of an article can be formed.

In the coating film formed from the antiviral coating composition of the present invention, the metal-doped silica contained in the coating film exhibits excellent antiviral action not only against enveloped viruses but also against non-enveloped viruses. Therefore, the kinds of viruses that are targeted by the antiviral action are not limited and include various pathogenic viruses. For example, as enveloped viruses, influenza A, B, and C viruses, parainfluenza virus, mumps virus, measles virus, human metapneumovirus, RS virus, Nipah virus, Hendra virus, yellow fever virus, dengue virus, Japanese encephalitis virus, West Nile virus, hepatitis B, C, and D viruses, eastern and western equine encephalitis viruses, rubella virus, Lassa virus, Junin virus, Machupo virus, Guanarito virus, Sabia virus, Crimean-Congo hemorrhagic fever virus, sandfly fever virus, Hantavirus, Sin Nombre virus, Rabies virus, Ebola virus, Marburg virus, bat lyssavirus, human T-cell leukemia virus, human immunodeficiency virus, human coronavirus, SARS coronavirus, SARS-CoV-2 virus (COVID-19 virus), herpes virus, varicella zoster virus, EB virus, cytomegalovirus, smallpox virus, monkeypox virus, cowpox virus, Molluscipoxvirus, Parapoxvirus, O'nyong-nyong virus, and the like can be targeted, and, as non-enveloped viruses, rhinovirus, poliovirus, foot-and-mouth disease virus, rotavirus, norovirus, enterovirus, hepatovirus, astrovirus, sapovirus, hepatitis A and E viruses, human parvovirus, polyomavirus, human papillomavirus, adenovirus, coxsackievirus, and the like can be targeted.

In addition, the metal-doped silica contained in the antiviral coating composition of the present invention exhibits excellent antiviral action even at the time from the application of the antiviral coating composition of the present invention to the surface of an article to the formation of a coating film. At this time, the alcohol-based solvent or the mixed solvent of an alcohol-based solvent and water contained in the antiviral coating composition of the present invention also exhibits antiviral action.

### Examples

Hereinafter, the present invention will be described in detail with reference to examples. However, the present invention should not be construed as being limited to the following descriptions.

### Production Reference Example 1: Production of Copper- and Aluminum-Doped Mesoporous Silica

Hexadecyltrimethylammonium chloride as a surfactant, copper chloride as a raw material for doping copper in a mesoporous silica, and aluminum chloride as a raw material for doping aluminum in a mesoporous silica were dissolved in water as a solvent, stirred at 100°C for 1 hour, and then cooled to room temperature. After that, tetraethoxysilane as a silica raw material was further dissolved and stirred until uniform. Next, an aqueous sodium hydroxide solution as a basic aqueous solution was added to the reaction liquid such that the pH immediately after the addition was 9, and stirred at room temperature for 20 hours. The formed precipitates were collected by filtration, dried at 50°C for 24 hours, and then calcined at 570°C for 5 hours, thereby giving the intended copper- and aluminum-doped mesoporous silica as a slightly bluish white powder.

Incidentally, the amounts of hexadecyltrimethylammonium chloride as a surfactant, copper chloride as a raw material for doping copper in a mesoporous silica, aluminum chloride as a raw material for doping aluminum in a mesoporous silica, and water as a solvent used per 1 mol of tetraethoxysilane as a silica raw material were each as follows.
Hexadecyltrimethylammonium chloride: 0.225 mol Copper chloride: 0.0204 mol
Aluminum chloride: 0.0482 mol
Water: 125 mol

In addition, for the preparation of the aqueous sodium hydroxide solution as a basic aqueous solution, 0.195 mol of sodium hydroxide was used per 1 mol of tetraethoxysilane as a silica raw material.

The copper- and aluminum-doped mesoporous silica obtained by the above method had a specific surface area of 1100 m²/g, and the fine pore diameter was about 2.5 nm (calculated by BJH calculation from the adsorption isotherm of nitrogen gas measured at liquid nitrogen temperature by the multi-point method using BELSORP MAX II manufactured by MicrotracBEL Corp.). In addition, about 50 mg of the copper- and aluminum-doped mesoporous silica was accurately weighed out and dissolved in 4 mL of hydrochloric acid, and then the concentrations of copper and aluminum in the hydrochloric acid solution were measured using an Inductively Coupled Plasma-Optical Emission Spectrometer (iCAP PRO XP ICP-OES manufactured by Thermo Fisher Scientific, same hereinafter). Based on the measurement results, the copper and aluminum contents in the copper- and aluminum-doped mesoporous silica were calculated. As a result, the copper content was 2.09 wt%, and the aluminum content was 2.00 wt%. The doping of the mesoporous silica with copper and aluminum was confirmed using an X-ray photoelectron spectrometer (K-Alpha Surface Analysis manufactured by Thermo Fisher Scientific, same hereinafter) and a transmission electron microscope (JEM2010 manufactured by JEOL Ltd., same hereinafter).

### Production Example 1: Production of Antiviral Coating Composition of the Present Invention (No. 1)

### (Step 1)

In a 2 L I-Boy PP wide-mouth bottle, 140 g of the copper- and aluminum-doped mesoporous silica obtained in Production Reference Example 1, 560 g of ethanol, and 1760 g of 5 mmϕ alumina balls were placed. At room temperature, the bottle was put on a ball mill stand and treated at a rotation speed of 250 rpm for 1 hour and further at 450 rpm for 9 hours, and then the alumina balls were removed, thereby giving an ethanol slurry in which the content of the copper- and aluminum-doped mesoporous silica having a median diameter of about 0.6 µm (the median diameter was measured using a laser diffraction particle size distribution analyzer (SALD-3100 manufactured by Shimadzu Corporation), same hereinafter) was 20 wt%.

### (Step 2)

In a 2 L I-Boy PP wide-mouth bottle, 35 g of a powder of a copolymer of vinylpyrrolidone and vinyl acetate (PVP/VA S630, manufactured by Ashland Inc., ratio between vinylpyrrolidone and vinyl acetate units = 6:4, weight average molecular weight (catalog value): 51,000, same hereinafter) and 490 g of ethanol were placed to dissolve the powder of the copolymer of vinylpyrrolidone and vinyl acetate in ethanol, and then 175 g of the ethanol slurry in which the content of the copper- and aluminum-doped mesoporous silica having a median diameter of about 0.6 µm was 20 wt% obtained in Step 1 and 1760 g of 2 mmϕ alumina balls were placed. At room temperature, the bottle was put on a ball mill stand and treated at a rotation speed of 500 rpm for 9 hours, and then the alumina balls were removed, thereby giving an antiviral coating composition of the present invention in which the content of the copper- and aluminum-doped mesoporous silica having a median diameter of about 0.5 µm was 5 wt%, the content of the copolymer of vinylpyrrolidone and vinyl acetate was 5 wt%, and the content of ethanol was 90 wt%.

### Production Example 2: Production of Antiviral Coating Composition of the Present Invention (No. 2)

In a 2 L I-Boy PP wide-mouth bottle, 35 g of the copper- and aluminum-doped mesoporous silica obtained in Production Reference Example 1, 315 g of ethanol, 350 g of a 10 wt% ethanol solution of a powder of a copolymer of vinylpyrrolidone and vinyl acetate (PVP/VA S630), and 1700 g of 2 mmϕ alumina balls were placed. At room temperature, the bottle was put on a ball mill stand and treated at a rotation speed of 900 rpm for 24 hours, and then the alumina balls were removed, thereby giving an antiviral coating composition of the present invention in which the content of the copper- and aluminum-doped mesoporous silica having a median diameter of about 0.5 µm was 5 wt%, the content of the copolymer of vinylpyrrolidone and vinyl acetate was 5 wt%, and the content of ethanol was 90 wt%.

### Production Example 3: Production of Antiviral Coating Composition of the Present Invention (No. 3)

### (Step 1)

In a 250 mL I-Boy PP wide-mouth bottle, 4.4 g of the copper- and aluminum-doped mesoporous silica obtained in Production Reference Example 1, 83.6 g of ethanol, and 220 g of 2 mmϕ alumina balls were placed. At room temperature, the bottle was put on a ball mill stand and treated at a rotation speed of 180 rpm for 8 hours, and then the alumina balls were removed, thereby giving an ethanol slurry in which the content of the copper- and aluminum-doped mesoporous silica having a median diameter of about 0.5 µm was 5 wt%.

### (Step 2)

The ethanol slurry in which the content of the copper- and aluminum-doped mesoporous silica having a median diameter of about 0.5 µm was 5 wt% obtained in Step 1, a powder of a copolymer of vinylpyrrolidone and vinyl acetate (PVP/VA S630), and ethanol were mixed in a mass ratio of 20:1:79 and stirred, thereby giving an antiviral coating composition of the present invention in which the content of the copper- and aluminum-doped mesoporous silica having a median diameter of about 0.5 µm was 1 wt%, the content of the copolymer of vinylpyrrolidone and vinyl acetate was 1 wt%, and the content of ethanol was 98 wt%.

### Production Example 4: Production of Antiviral Coating Composition of the Present Invention (No. 4)

In the same manner as in Production Example 2 except that a 5 wt% ethanol solution of a powder of a copolymer of vinylpyrrolidone and vinyl acetate (PVP/VA S630) was used in place of the 10 wt% ethanol solution of the powder of the copolymer of vinylpyrrolidone and vinyl acetate (PVP/VA S630), an antiviral coating composition of the present invention, in which the content of the copper- and aluminum-doped mesoporous silica having a median diameter of about 0.5 µm was 5 wt%, the content of the copolymer of vinylpyrrolidone and vinyl acetate was 2.5 wt%, and the content of ethanol was 92.5 wt%, was obtained.

### Production Example 5: Production of Antiviral Coating Composition of the Present Invention (No. 5)

In the same manner as in Production Example 3 except that the mixing of the ethanol slurry in which the content of the copper- and aluminum-doped mesoporous silica having a median diameter of about 0.5 µm was 5 wt% obtained in Step 1, a powder of a copolymer of vinylpyrrolidone and vinyl acetate (PVP/VA S630), and ethanol in Step 2 of Production Example 3 was performed in a mass ratio of 40:1:159, an antiviral coating composition of the present invention, in which the content of the copper- and aluminum-doped mesoporous silica having a median diameter of about 0.5 µm was 1 wt%, the content of the copolymer of vinylpyrrolidone and vinyl acetate was 0.5 wt%, and the content of ethanol was 98.5 wt%, was obtained.

### Production Example 6: Production of Antiviral Coating Composition of the Present Invention (No. 6)

In a 2 L I-Boy PP wide-mouth bottle, 70 g of a 50 wt % aqueous solution of a copolymer of vinylpyrrolidone and vinyl acetate (PVP/VA W735, manufactured by Ashland Inc., ratio between vinylpyrrolidone and vinyl acetate units = 7:3, weight average molecular weight (catalog value): 27,300), 455 g of ethanol, 175 g of the ethanol slurry in which the content of the copper- and aluminum-doped mesoporous silica having a median diameter of about 0.6 µm was 20 wt% obtained in Step 1 of Production Example 1, and 1760 g of 2 mmϕ alumina balls were placed. At room temperature, the bottle was put on a ball mill stand and treated at a rotation speed of 500 rpm for 9 hours, and then the alumina balls were removed, thereby giving an antiviral coating composition of the present invention in which the content of the copper- and aluminum-doped mesoporous silica having a median diameter of about 0.5 µm was 5 wt%, the content of the copolymer of vinylpyrrolidone and vinyl acetate was 5 wt%, the content of water was 5 wt%, and the content of ethanol was 85 wt%.

### Production Example 7: Production of Antiviral Coating Composition of the Present Invention (No. 7)

In the same manner as in Production Example 6 except that a 50 wt% ethanol solution of a copolymer of vinylpyrrolidone and vinyl acetate (PVP/VA E535, manufactured by Ashland Inc., ratio between vinylpyrrolidone and vinyl acetate units = 5:5, weight average molecular weight (catalog value): 36,700) was used in place of the 50 wt% aqueous solution of the copolymer of vinylpyrrolidone and vinyl acetate (PVP/VA W735), an antiviral coating composition of the present invention, in which the content of the copper- and aluminum-doped mesoporous silica having a median diameter of about 0.5 µm was 5 wt%, the content of the copolymer of vinylpyrrolidone and vinyl acetate was 5 wt%, and the content of ethanol was 90 wt%, was obtained.

### Production Example 8: Production of Antiviral Coating Composition of the Present Invention (No. 8)

In the same manner as in Production Example 6 except that a 50 wt% ethanol solution of a copolymer of vinylpyrrolidone and vinyl acetate (PVP/VA E335, manufactured by Ashland Inc., ratio between vinylpyrrolidone and vinyl acetate units = 3:7, weight average molecular weight (catalog value): 28,800) was used in place of the 50 wt% aqueous solution of the copolymer of vinylpyrrolidone and vinyl acetate (PVP/VA W735), an antiviral coating composition of the present invention, in which the content of the copper- and aluminum-doped mesoporous silica having a median diameter of about 0.5 µm was 5 wt%, the content of the copolymer of vinylpyrrolidone and vinyl acetate was 5 wt%, and the content of ethanol was 90 wt%, was obtained.

### Production Example 9: Production of Antiviral Coating Composition of the Present Invention (No. 9)

In the same manner as in Production Example 1 except that a powder of polyvinylpyrrolidone (PVP K15, manufactured by Ashland Inc., weight average molecular weight (catalog value): 8,000) was used in place of the powder of the copolymer of vinylpyrrolidone and vinyl acetate (PVP/VA S630), an antiviral coating composition of the present invention, in which the content of the copper- and aluminum-doped mesoporous silica having a median diameter of about 0.5 µm was 5 wt%, the content of polyvinylpyrrolidone was 5 wt%, and the content of ethanol was 90 wt%, was obtained.

### Production Example 10: Production of Antiviral Coating Composition of the Present Invention (No. 10)

In the same manner as in Production Example 1 except that a powder of polyvinylpyrrolidone (PVP K30, manufactured by Ashland Inc., weight average molecular weight (catalog value): 60,000) was used in place of the powder of the copolymer of vinylpyrrolidone and vinyl acetate (PVP/VA S630), an antiviral coating composition of the present invention, in which the content of the copper- and aluminum-doped mesoporous silica having a median diameter of about 0.5 µm was 5 wt%, the content of polyvinylpyrrolidone was 5 wt%, and the content of ethanol was 90 wt%, was obtained.

### Production Example 11: Production of Antiviral Coating Composition of the Present Invention (No. 11)

In the same manner as in Production Example 1 except that a powder of polyvinylpyrrolidone (PVP K90, manufactured by Ashland Inc., weight average molecular weight (catalog value): 1,300,000) was used in place of the powder of the copolymer of vinylpyrrolidone and vinyl acetate (PVP/VA S630), an antiviral coating composition of the present invention, in which the content of the copper- and aluminum-doped mesoporous silica having a median diameter of about 0.5 µm was 5 wt%, the content of polyvinylpyrrolidone was 5 wt%, and the content of ethanol was 90 wt%, was obtained. A pump spray filled with this antiviral coating composition of the present invention was held horizontally, and, from a height of 15 cm, the composition was sprayed once onto a glass slide and dried naturally, thereby forming a coating film on the surface of the glass slide. The coating film formed on the surface of the glass slide was white, and, as a result of microscopic observation, the mesoporous silica in the coating film was uniformly dispersed and loaded without aggregation (Fig. 1).

### Test Example 1: Antiviral Action against Enveloped Virus of Coating Film Formed from Antiviral Coating Composition of the Present Invention

### (1) Formation of Coating Film through Aerosol Application

An aerosol can filled with a stock solution prepared by mixing the antiviral coating composition of the present invention produced in Production Example 1 with ethanol in a weight ratio of 1:4 (the content of the copper- and aluminum-doped mesoporous silica having a median diameter of about 0.5 µm was 1 wt%, the content of the copolymer of vinylpyrrolidone and vinyl acetate was 1 wt%, and the content of ethanol was 98 wt%) together with a liquefied petroleum gas as a propellant (vapor pressure at 20°C: 0.29 MPa, same hereinafter) in a weight ratio of 6:4 was held horizontally, and, from a height of 15 cm, the composition was sprayed uniformly over the entire surface of a 10 cm × 20 cm PET film for 7 seconds (spray amount: 1.36 g/sec) and dried naturally, thereby forming a coating film on the surface of the PET film. During the spraying of the aerosol composition from the aerosol can, problems with spraying due to nozzle clogging or the like were not seen. The coating film formed on the surface of the PET film was white, and the loading amount of the copper- and aluminum-doped mesoporous silica having a median diameter of about 0.5 µm was 0.27 mg/cm². Incidentally, the loading amount of the mesoporous silica was calculated as follows. The PET film having a white coating film formed on its surface was placed in a crucible, 6 mol/L hydrochloric acid was added, followed by heating at 120°C for 1 hour, and then the amount of copper in the crucible was measured using an Inductively Coupled Plasma-Optical Emission Spectrometer; the calculation was performed based on the amount of copper thus measured.

### (2) Evaluation of Antiviral Action

MDCK cells (cells derived from canine kidney) as host cells were infected with influenza A virus (H3N2, A/Hong Kong/8/68; TC adapted, ATCC VR-1679) and cultured. Subsequently, the cell debris was removed by centrifugation to give a virus suspension (infectivity titer: 4.7 × 10⁷ PFU/mL). In accordance with ISO 21702, 0.4 mL of this virus suspension was dropped on a 5 cm square test piece cut out from the PET film having a white coating film formed on its surface, covered with a 4 cm square cover film, and then left at 25°C. After 24 hours, a virus washout solution was added to the test piece to wash out the virus, and the viral infectivity titer was measured by the plaque assay method. The result is shown in Table 1**.** Incidentally, Table 1 also shows the results of the same tests performed using the antiviral coating compositions of the present invention produced in Production Examples 6 to 8, as well as the result of the case where, as a control, the virus suspension was dropped on a 5 cm square PET film.

**[Table 1]**

| Specimen | Coating Composition | Resin Component | | | Viral Infectivity Titer (PFU/cm²) Average Common Logarithm | | Antiviral Activity Value |
|---|---|---|---|---|---|---|---|
| | | Kind | VP:VA | Mw | Immediately after inoculation | After 24 hours | [*R*] |
| Coating Film-Formed PET Film | Production Example 1 | PVP/VA | 6:4 | 51,000 | Not measured | 0.90 [*A*ₜ] | 4.4 |
| Coating Film-Formed PET Film | Production Example 6 | PVP/VA | 7:3 | 27,300 | Not measured | < 0.80 [*A*ₜ] | ≥ 4.5 |
| Coating Film-Formed PET Film | Production Example 7 | PVP/VA | 5:5 | 36,700 | Not measured | < 0.80 [*A*ₜ] | ≥ 4.5 |
| Coating Film-Formed PET Film | Production Example 8 | PVP/VA | 3:7 | 28,800 | Not measured | < 0.80 [*A*ₜ] | ≥ 4.5 |
| Untreated PET Film | - | - | - | - | 6.07 | 5.30 [*U*ₜ] | - |

| | | | | | | | |
|---|---|---|---|---|---|---|---|
| PVP/VA : Copolymer of vinylpyrrolidone and vinyl acetate VP:VA: Ratio between vinylpyrrolidone and vinyl acetate units Mw: Weight average molecular weight (catalog value) Antiviral activity value [R] = [*U*ₜ] - [Aₜ] | | | | | | | |

As is clear from Table 1, the coating films formed from the antiviral coating compositions of the present invention produced in Production Examples 1 and 6 to 8 exhibited excellent antiviral action against influenza virus, which is an enveloped virus.

### Test Example 2: Antiviral Action against Non-Enveloped Virus of Coating Film Formed from Antiviral Coating Composition of the Present Invention

### (1) Formation of Coating Film through Aerosol Application

From the antiviral coating composition of the present invention produced in Production Example 1, a white coating film was formed on the surface of a 10 cm × 20 cm PET film in the same manner as in Test Example 1.

### (2) Evaluation of Antiviral Action

CRFK cells (cells derived from feline kidney) as host cells were infected with feline calicivirus (F-9, Feline calicivirus; Strain: F-9, ATCC VR-782) as a surrogate virus for norovirus, and cultured. Subsequently, the cell debris was removed by centrifugation to give a virus suspension (infectivity titer: 2.4 × 10⁷ PFU/mL). In accordance with ISO 21702, 0.4 mL of this virus suspension was dropped on a 5 cm square test piece cut out from the PET film having a white coating film formed on its surface, covered with a 4 cm square cover film, and then left at 25°C. After 24 hours, a virus washout solution was added to the test piece to wash out the virus, and the viral infectivity titer was measured by the plaque assay method. The result is shown in Table 2. Incidentally, Table 2 also shows the results of the same tests performed using the antiviral coating compositions of the present invention produced in Production Examples 6 to 8, as well as the result of the case where, as a control, the virus suspension was dropped on a 5 cm square PET film.

**[Table 2]**

| Specimen | Coating Composition | Resin Component | | | Viral Infectivity Titer (PFU/cm²) Average Common Logarithm | | Antiviral Activity Value [*R*] |
|---|---|---|---|---|---|---|---|
| | | Kind | VP:VA | Mw | Immediately after inoculation | After 24 hours | |
| Coating Film-Formed PET Film | Production Example 1 | PVP/VA | 6:4 | 51,000 | Not measured | 0.90 [Aₜ] | 4.5 |
| Coating Film-Formed PET Film | Production Example 6 | PVP/VA | 7:3 | 27,300 | Not measured | 1.10 [*A*ₜ] | 4.3 |
| Coating Film-Formed PET Film | Production Example 7 | PVP/VA | 5:5 | 36,700 | Not measured | 0.80 [Aₜ] | 4.6 |
| Coating Film-Formed PET Film | Production Example 8 | PVP/VA | 3:7 | 28,800 | Not measured | < 0.80 [Aₜ] | ≥ 4.6 |
| Untreated PET Film | - | - | - | - | 5.70 | 5.42 [*U*ₜ] | - |

| | | | | | | | |
|---|---|---|---|---|---|---|---|
| PVP/VA: Copolymer of vinylpyrrolidone and vinyl acetate VP:VA: Ratio between vinylpyrrolidone and vinyl acetate units Mw: Weight average molecular weight (catalog value) Antiviral activity value [R] = [*U*ₜ] - [Aₜ] | | | | | | | |

As is clear from Table 2, the coating films formed from the antiviral coating compositions of the present invention produced in Production Examples 1 and 6 to 8 exhibited excellent antiviral action also against feline calicivirus, which is a non-enveloped virus.

### Test Example 3: Adsorption Action for Hemagglutinin (HA) of Coating Film Formed from Antiviral Coating Composition of the Present Invention

The adsorption action of a coating film formed from the antiviral coating composition of the present invention for HA, the surface protein of influenza virus, was evaluated using HA (H1N1) (A/California/06/2009 Hemagglutinin ELISA Development Kit (Immune Technology Corp., IT-E3Ag-2009H1N1-California/06). Specifically, from a 10 cm × 20 cm PET film having on its surface a white coating film formed from the antiviral coating composition of the present invention produced in Production Example 1 in the same manner as in Test Example 1, a test piece having an area of 7.4 cm² (the loading amount of the copper- and aluminum-doped mesoporous silica having a median diameter of about 0.5 µm: 2 mg) was cut out, immersed in 2 mL of an HA solution having an initial concentration of 25.3 ng/mL, stirred for 20 seconds using a vortex mixer, and allowed to stand at room temperature. After 3 minutes, the film was taken out, the solution was centrifuged to settle the solids, the supernatant was collected and measured for its HA concentration, and the adsorption rate for HA was calculated from the mathematical formula: Adsorption rate (%) = ((Initial HA concentration - HA concentration after 3 minutes) /Initial HA concentration) × 100. Table 3 shows the relative value of the calculated adsorption rate for HA, taking, as 100, the adsorption rate of a copper- and aluminum-doped mesoporous silica having a median diameter of about 0.5 µm for HA calculated in the same manner using 2 mL of an HA solution having an initial concentration of 25.3 ng/mL having added thereto 2 mg of the mesoporous silica. Incidentally, Table 3 also shows the results of the same tests performed using the antiviral coating compositions of the present invention produced in Production Examples 9 to 11.

**[Table 3]**

| Specimen | Coating Composition | Silica Content | Resin Component | | | Adsorption Rate (Relative Value) |
|---|---|---|---|---|---|---|
| | | | Kind | VP:VA | Mw | |
| Cu,Al-Doped Mesoporous Silica | | 0.1 wt% | - | - | - | 100 |
| Coating Film-Formed PET Film | Production Example 1 | 0.1 wt% | PVP/VA | 6:4 | 51,000 | 94.7 |
| Coating Film-Formed PET Film | Production Example 9 | 0.1 wt% | PVP | - | 8,000 | 94.9 |
| Coating Film-Formed PET Film | Production Example 10 | 0.1 wt% | PVP | - | 60,000 | 86.8 |
| Coating Film-Formed PET Film | Production Example 11 | 0.1 wt% | PVP | - | 1,300,000 | 55.3 |

| | | | | | | |
|---|---|---|---|---|---|---|
| PVP/VA: Copolymer of vinylpyrrolidone and vinyl acetate VP:VA: Ratio between vinylpyrrolidone and vinyl acetate units PVP: Polyvinylpyrrolidone Mw: Weight average molecular weight (catalog value) | | | | | | |

As is clear from Table 3, the adsorption rate for HA of the coating film formed from the antiviral coating composition of the present invention produced in Production Example 1 was almost equal to the adsorption rate for HA of the copper- and aluminum-doped mesoporous silica having a median diameter of about 0.5 µm, and almost no decrease in the adsorption rate for HA of the mesoporous silica due to the coexistence with the copolymer of vinylpyrrolidone and vinyl acetate in the coating film was seen. From this, the excellent adsorption action for HA of the coating film formed from the antiviral coating composition of the present invention produced in Production Example 1 was confirmed. The adsorption rate for HA of the coating films formed from the antiviral coating compositions of the present invention produced in Production Examples 9 to 11 decreased with an increase in the weight average molecular weight of polyvinylpyrrolidone. From these results, it was presumed that when the weight average molecular weight of the vinylpyrrolidone unit-containing polymer is too large, the exhibition of antiviral properties by the mesoporous silica contained in the formed coating film may be inhibited.

### Test Example 4: Durability of Coating Film Formed from Antiviral Coating Composition of the Present Invention (by Aerosol Application)

An aerosol can filled with a stock solution prepared using the antiviral coating composition of the present invention produced in Production Example 1 (the content of the copper- and aluminum-doped mesoporous silica having a median diameter of about 0.5 µm was 1 wt%, the content of the copolymer of vinylpyrrolidone and vinyl acetate was 1 wt%, and the content of ethanol was 98 wt%) together with a liquefied petroleum gas as a propellant in a weight ratio of 6:4 in the same manner as in Test Example 1 was held horizontally, and, from a height of 15 cm, the composition was sprayed onto a PET film for 1 second and dried naturally, thereby giving a PET film having a white coating film on its surface with a diameter of about 6 cm. From the PET film, two test pieces (test piece A and test piece B) each measuring 2 cm × 4 cm were cut out. Sellotape (registered trademark, same hereinafter) was tightly attached to the entire surface of the coating film of the test piece A by pressing with hand, and then immediately peeled off. The test piece A after removing the Sellotape and the test piece B were each placed in a crucible, 6 mol/L hydrochloric acid was added, followed by heating at 120°C for 1 hour, and then the amount of copper in the crucible was measured using an Inductively Coupled Plasma-Optical Emission Spectrometer to determine the amount of copper in each of the test piece A after removing the Sellotape and the test piece B. The durability of the coating film was evaluated from the mathematical formula: Coating film residual rate (%) = (Amount of copper in test piece A after removing Sellotape/Amount of copper in test piece B) × 100. The result is shown in Table 4. Incidentally, Table 4 also shows the result of the same test performed in which the antiviral coating composition of the present invention produced in Production Example 5 (stock solution) (the content of the copper- and aluminum-doped mesoporous silica having a median diameter of about 0.5 µm was 1 wt%, the content of the copolymer of vinylpyrrolidone and vinyl acetate was 0.5 wt%, and the content of ethanol was 98.5 wt%) and a liquefied petroleum gas as a propellant were filled into an aerosol can in a weight ratio of 6:4**,** the result of the same test performed in which a stock solution prepared using the antiviral coating composition of the present invention produced in Production Example 6 (the content of the copper- and aluminum-doped mesoporous silica having a median diameter of about 0.5 µm was 1 wt%, the content of the copolymer of vinylpyrrolidone and vinyl acetate was 1 wt%, the content of water was 1 wt%, and the content of ethanol was 97 wt%) and a liquefied petroleum gas as a propellant were filled into an aerosol can in a weight ratio of 6:4, and the result of the same test performed in which, as a control, a stock solution in which the content of the copper- and aluminum-doped mesoporous silica having a median diameter of about 0.5 µm was 1 wt% and the content of ethanol was 99 wt%, and a liquefied petroleum gas as a propellant were filled into an aerosol can in a weight ratio of 6:4.

**[Table 4]**

| Specimen | Coating Composition | Stock Solution | | | | | | | Coating Film Residual Rate |
|---|---|---|---|---|---|---|---|---|---|
| | | Silica Content | Resin Component | | | | Solvent Content | | |
| | | | Kind | VP:VA | Mw | Content | Ethanol | Water | |
| Coating Film-Formed PET Film | Production Example 1 | 1 wt% | PVP/VA | 6:4 | 51,000 | 1 wt% | 98 wt% | | 68% |
| Coating Film-Formed PET Film | Production Example 5 | 1 wt% | PVP/VA | 6:4 | 51,000 | 0.5 wt% | 98.5 wt% | | 56% |
| Coating Film-Formed PET Film | Production Example 6 | 1 wt% | PVP/VA | 7:3 | 27,300 | 1 wt% | 97 wt% | 1 wt% | 80% |
| Coating Film-Formed PET Film | - | 1 wt% | - | - | - | - | 99 wt% | | 8% |

| | | | | | | | | | |
|---|---|---|---|---|---|---|---|---|---|
| PVP/VA: Copolymer of vinylpyrrolidone and vinyl acetate VP:VA: Ratio between vinylpyrrolidone and vinyl acetate units Mw: Weight average molecular weight (catalog value) | | | | | | | | | |

As is clear from Table 4, as a result of using a vinylpyrrolidone unit-containing polymer as a resin component of a coating composition, it was possible to form a coating film firmly retained on the surface of a PET film by aerosol application.

### Test Example 5: Durability of Coating Film Formed from Antiviral Coating Composition of the Present Invention (by Coater Application)

The antiviral coating composition of the present invention produced in Production Example 1 was applied to the surface of a PET film using a bar coater #10 and dried naturally, thereby giving a PET film having a white coating film on its surface with a film thickness of about 1.4 µm. From the PET film, two 5 cm square test pieces (test piece C and test piece D) were cut out. Sellotape was tightly attached to the entire surface of the coating film of the test piece C by pressing with hand, and then immediately peeled off. The test piece C after removing the Sellotape and the test piece D were each placed in a crucible, 6 mol/L hydrochloric acid was added, followed by heating at 120°C for 1 hour, and then the amount of copper in the crucible was measured using an Inductively Coupled Plasma-Optical Emission Spectrometer to determine the amount of copper in each of the test piece C after removing the Sellotape and the test piece D. The durability of the coating film was evaluated from the mathematical formula: Coating film residual rate (%) = (Amount of copper in test piece C after removing Sellotape/Amount of copper in test piece D) × 100. The result is shown in Table 5. Incidentally, Table 5 also shows the results of the same tests performed using the antiviral coating compositions of the present invention produced in Production Examples 4 and 6 to 8, as well as the result of the same test performed in which, as a control, a coating composition in which the content of the copper- and aluminum-doped mesoporous silica having a median diameter of about 0.5 µm was 5 wt% and the content of ethanol was 95 wt%, was applied to the surface of a PET film using a coater.

**[Table 5]**

| Specimen | Coating Composition | | | | | | | | Spray Deposition Rate |
|---|---|---|---|---|---|---|---|---|---|
| | | Silica | Resin Component | | | | Solvent Content | | |
| | | Content | Kind | VP:VA | Mw | Content | Ethanol | Water | |
| Coating Film-Formed PET Film | Production Example 1 | 5 wt% | PVP/VA | 6:4 | 51,000 | 5 wt% | 90 wt% | | 100% |
| Coating Film-Formed PET Film | Production Example 4 | 5 wt% | PVP/VA | 6:4 | 51,000 | 2.5 wt% | 92.5 wt% | | 56% |
| Coating Film-Formed PET Film | Production Example 6 | 5 wt% | PVP/VA | 7:3 | 27,300 | 5 wt% | 85 wt% | 5 wt% | 80% |
| Coating Film-Formed PET Film | Production Example 7 | 5 wt% | PVP/VA | 5:5 | 36,700 | 5 wt% | 90 wt% | | 100% |
| Coating Film-Formed PET Film | Production Example 8 | 5 wt% | PVP/VA | 3:7 | 28,800 | 5 wt% | 90 wt% | | 100% |
| Coating Film-Formed PET Film | - | 5 wt% | - | - | - | - | 95 wt% | | 8% |

| | | | | | | | | | |
|---|---|---|---|---|---|---|---|---|---|
| PVP/VA: Copolymer of vinylpyrrolidone and vinyl acetate VP:VA: Ratio between vinylpyrrolidone and vinyl acetate units Mw: Weight average molecular weight (catalog value) | | | | | | | | | |

As is clear from Table 5, as a result of using a vinylpyrrolidone unit-containing polymer as a resin component of a coating composition, it was possible to form a coating film firmly retained on the surface of a PET film by coater application.

### Production Reference Example 2: Production of Aluminum-Doped Mesoporous Silica

An aluminum-doped mesoporous silica was obtained as a white powder in the same manner as in Production Reference Example 1, except that copper chloride used in Production Reference Example 1 as a raw material for doping copper in a mesoporous silica was not used (specific surface area: 1151 m²/g, fine pore diameter: 2.5 nm, aluminum content: 1.82 wt%).

### Production Example 12: Production of Antiviral Coating Composition of the Present Invention (No. 12)

In the same manner as in Production Example 1 except that the aluminum-doped mesoporous silica obtained in Production Reference Example 2 was used in place of the copper- and aluminum-doped mesoporous silica obtained in Production Reference Example 1, an antiviral coating composition of the present invention, in which the content of the aluminum-doped mesoporous silica having a median diameter of about 0.5 µm was 5 wt%, the content of the copolymer of vinylpyrrolidone and vinyl acetate was 5 wt%, and the content of ethanol was 90 wt%, was obtained. A coating film formed from this antiviral coating composition of the present invention had antiviral action and durability equal to those of the coating film formed from the antiviral coating composition of the present invention produced in Production Example 1.

### Production Reference Example 3: Production of Copper- and Aluminum-Doped Non-Porous Silica

A solution (a) of sodium silicate as a silica raw material (sodium metasilicate (9-hydrate): manufactured by Nippon Chemical Industrial Co., Ltd., SiO₂/Na₂O = 0.9 to 1.1 (manufacturer value)) dissolved in water as a solvent and a solution (b) of copper chloride as a raw material for doping copper in a non-porous silica and aluminum chloride as a raw material for doping aluminum in a non-porous silica dissolved in water as a solvent were each prepared. The solution (a) and the solution (b) were mixed at room temperature and stirred for 5 minutes, and then hydrochloric acid was added dropwise over 30 minutes with further stirring (the pH at the start of hydrochloric acid dropwise addition was 14, and the pH at the completion was 9). After about 30 minutes, the formed precipitates were suction-filtered, and the precipitates collected by filtration were thoroughly washed with water (until the electrical conductivity of the wash solution fell below 1000 µS) and then dried at 80°C overnight. The collected filter cake was coarsely crushed in a mixer and then calcined at 570°C for 5 hours, thereby giving the intended copper- and aluminum-doped non-porous silica as a slightly bluish white powder.

Incidentally, the amounts of copper chloride as a raw material for doping copper in a non-porous silica, aluminum chloride as a raw material for doping aluminum in a non-porous silica, and water as a solvent used per 1 mol of sodium silicate as a silica raw material were each as follows.
Copper chloride: 0.0201 mol
Aluminum chloride: 0.0475 mol
Water for solution (a) preparation: 48.6 mol
Water for solution (b) preparation: 90.2 mol

In addition, 1.59 mol of hydrochloric acid was used per 1 mol of sodium silicate as a silica raw material.

The copper- and aluminum-doped non-porous silica obtained by the above method had a BET specific surface area of 18.8 m²/g. In addition, the content of copper in the copper- and aluminum-doped non-porous silica was 1.43 wt%, and the aluminum content was 2.03 wt%. The doping of the non-porous silica with copper and aluminum was confirmed using an X-ray photoelectron spectrometer and a transmission electron microscope.

### Production Example 13: Production of Antiviral Coating Composition of the Present Invention (No. 13)

In the same manner as in Production Example 1 except that the copper- and aluminum-doped non-porous silica obtained in Production Reference Example 3 was used in place of the copper- and aluminum-doped mesoporous silica obtained in Production Reference Example 1, an antiviral coating composition of the present invention, in which the content of the copper- and aluminum-doped non-porous silica having a median diameter of about 0.5 µm was 5 wt%, the content of the copolymer of vinylpyrrolidone and vinyl acetate was 5 wt%, and the content of ethanol was 90 wt%, was obtained. A coating film formed from this antiviral coating composition of the present invention had antiviral action and durability equal to those of the coating film formed from the antiviral coating composition of the present invention produced in Production Example 1.

### Industrial Applicability

The present invention makes it possible to provide an antiviral coating composition being capable of forming a coating film whose metal-doped silica exhibits excellent antiviral properties and which is firmly retained on the surface of an article; a coating film formed from the antiviral coating composition; and an article comprising the coating film. In this respect, the present invention is industrially applicable.

## Claims

1. An antiviral coating composition comprising:
(1) a metal-doped silica;
(2) a vinylpyrrolidone unit-containing polymer; and
(3) an alcohol-based solvent or a mixed solvent of an alcohol-based solvent and water.

2. The antiviral coating composition according to claim 1, wherein the metal doped in the silica is at least one member selected from the group consisting of copper, aluminum, zirconium, cobalt, manganese, and iron.

3. The antiviral coating composition according to claim **2,** wherein the metal doped in the silica is copper and/or aluminum.

4. The antiviral coating composition according to claim **1,** wherein the silica is a porous silica.

5. The antiviral coating composition according to claim 1, wherein the pyrrolidone unit-containing polymer is a copolymer of a vinylpyrrolidone unit and a non-vinylpyrrolidone unit.

6. The antiviral coating composition according to claim 5, wherein the ratio between the vinylpyrrolidone unit and the non-vinylpyrrolidone unit (vinylpyrrolidone unit:non-vinylpyrrolidone unit) is 2:8 to 8:2.

7. The antiviral coating composition according to claim 5, wherein the copolymer of a vinylpyrrolidone unit and a non-vinylpyrrolidone unit is a copolymer of vinylpyrrolidone and vinyl acetate.

8. The antiviral coating composition according to claim 1, wherein the pyrrolidone unit-containing polymer is polyvinylpyrrolidone.

9. The antiviral coating composition according to claim 1, wherein the pyrrolidone unit-containing polymer has a weight average molecular weight of 5,000 to 1,500,000.

10. The antiviral coating composition according to claim 1, wherein the alcohol-based solvent is ethanol.

11. The antiviral coating composition according to claim 1, wherein the contents of the metal-doped silica, the vinylpyrrolidone unit-containing polymer, and the alcohol-based solvent or the mixed solvent of an alcohol-based solvent and water in the antiviral coating composition, respectively, are as follows: the content of the metal-doped silica is 0.1 to 20 wt%, the content of the vinylpyrrolidone unit-containing polymer is 0.1 to 20 wt%, and the content of the alcohol-based solvent or the mixed solvent of an alcohol-based solvent and water is 60 to 99.8 wt%.

12. The antiviral coating composition according to claim 1, wherein the weight ratio between the metal-doped silica and the vinylpyrrolidone unit-containing polymer (metal-doped silica: vinylpyrrolidone unit-containing polymer) is 1:99 to 75:25.

13. A method for producing an antiviral coating composition comprising a step in which
(1) a metal-doped silica;
(2) a vinylpyrrolidone unit-containing polymer; and
(3) an alcohol-based solvent or a mixed solvent of an alcohol-based solvent and water are housed in a treatment container and ball-milled.

14. An antiviral coating film comprising (1) a metal-doped silica and (2) a vinylpyrrolidone unit-containing polymer.

15. The antiviral coating film according to claim 14, wherein the antiviral coating film is formed from the antiviral coating composition according to claim 1.

16. An article comprising the antiviral coating film according to claim 14.
